# DEMANDE DE BREVET EUROPEEN

(11) **EP 4 629 376 A1**
(43) Date de publication de la demande: **08.10.2025**
(21) Numéro de dépôt: 24168180.8
(22) Date de dépôt: 03.04.2024
(51) Int. Cl.: H01M 10/052, H01M 10/0587, H01M 10/52, H01M 10/625, H01M 10/643, H01M 10/653, H01M 10/6551, H01M 10/658, H01M 50/213, H01M 50/383, H01M 50/30, H01M 50/507

(54) **MODULE DE BATTERIE POUR VEHICULE EXTRATERRESTRE**

(71) Demandeur: Venturi, 98000 Monaco (MC)
(72) Inventeur: BLONDEL, LOUIS-MARIE, 06600 Antibes (FR); MICHELIN, JEAN, 63400 Chamalières (FR); JOHANNI, MICHAEL, Upper Arlington, 43220 (US)
(74) Mandataire: Cabinet Beau de Loménie

(57) **Abrégé**

L'invention concerne un module de batterie (2a) pour véhicule extraterrestre, comprenant une pluralité de cellules d'accumulateurs (14) assemblées mécaniquement entre elles et connectées électriquement entre elles, chaque cellule d'accumulateurs comprenant un corps central, une pluralité d'accumulateurs disposés par paires de part et d'autre du corps central, deux busbars, deux capots (32) montés contre les busbars, et deux carters emboîtés contre des faces latérales opposées des accumulateurs, une plaque centrale de support mécanique (38a) montée contre les capots des cellules d'accumulateurs du côté d'une face latérale d'assemblage du module de batterie et comprenant, du côté opposé aux capots, des systèmes de chauffage (56), et une plaque extérieure de protection thermique (6a) montée contre les capots du côté opposé à la face latérale d'assemblage du module de batterie en délimitant avec eux au moins un volume interne de confinement des éjecta (48) qui débouche vers l'extérieur par l'intermédiaire de filtres à particules (54).

## Description

### Arrière-plan de l'invention

La présente invention se rapporte au domaine général des batteries électriques destinées à des applications spatiales, notamment celles équipant les véhicules extraterrestres.

Dans le cadre de futures missions extraterrestres, par exemple sur la Lune ou sur Mars, il est nécessaire de concevoir des équipements spatiaux qui devront fonctionner à des conditions environnementales extrêmement contraignantes (absence d'air, absence de pression, amplitudes thermiques très élevées pouvant aller de -170°C à +150°C, radiations solaires et cosmiques, etc.). Ces équipements recoupent notamment les véhicules, mais également les stations électriques, les habitants, les outils électriques, etc.

Pour faire fonctionner ces équipements spatiaux, il est connu de recourir à des batteries lithium-ion. Typiquement, de telles batteries se composent de plusieurs accumulateurs assemblés mécaniquement et connectées électriquement entre eux.

Dans leurs applications spatiales, de telles batteries doivent présenter une densité énergétique la plus élevée possible dans un encombrement le plus faible possible. De plus, la température de la batterie doit être homogène malgré qu'un accumulateur lithium-ion possède une plage de fonctionnement comprise entre -20°C et +60°C.

Pour des raisons évidentes de sécurité, il est également très important d'éviter toute propagation d'emballement thermique entre les différents accumulateurs. Et, en cas d'emballement thermique extrême d'un accumulateur, l'éjection des composants incandescents internes de la cellule endommagée (appelés également éjecta) en dehors de l'accumulateur ne doit pas endommager les autres accumulateurs de la batterie, celle-ci devant continuer à fonctionner pour la sécurité des astronautes.

Du fait de ces exigences particulières, ces batteries à usage spatial sont très chères à concevoir, avec des temps de disponibilité très longs, des quantités de production très basses et des packagings non standards propres à chaque fabricant.

### Objet et résumé de l'invention

La présente invention a donc pour but principal de pallier de tels inconvénients en proposant une batterie répondant à l'ensemble des exigences du domaine spatial tout en étant simple de conception.

Conformément à l'invention, ce but est atteint grâce à un module de batterie pour véhicule extraterrestre, comprenant :
- une pluralité de cellules d'accumulateurs assemblées mécaniquement entre elles et connectées électriquement entre elles, chaque cellule d'accumulateurs comprenant :
   ∘ un corps central formant support ;
   ∘ une pluralité d'accumulateurs disposés par paires de part et d'autre du corps central ;
   ∘ deux busbars montés contre les pôles respectifs des accumulateurs pour les connecter électriquement entre eux ;
   ∘ deux capots montés contre les busbars ; et
   ∘ deux carters latéraux emboîtés contre des faces latérales opposées des accumulateurs et fixés sur le corps central ;
- une plaque centrale de support mécanique montée contre les capots des cellules d'accumulateurs du côté d'une face latérale d'assemblage du module de batterie et comprenant, du côté opposé aux capots, des systèmes de chauffage ; et
- une plaque extérieure de protection thermique (6) montée contre les capots des cellules d'accumulateurs du côté opposé à la face latérale d'assemblage du module de batterie en délimitant avec ces capots au moins un volume interne de confinement des éjecta qui débouche vers l'extérieur par l'intermédiaire de filtres à particules.

Le module de batterie selon l'invention est remarquable notamment en ce qu'il présente un volume interne de confinement des éjecta qui permet, en cas d'emballement thermique extrême d'une cellule d'accumulateurs de contenir ces éjecta pour éviter qu'ils ne se propagent en dehors du module et endommagent les autres cellules d'accumulateurs. Ce volume interne de confinement s'ouvre vers l'extérieur par l'intermédiaire d'un filtre à particules pour libérer la pression interne tout en confinant les particules d'éjecta. Ainsi, même en cas d'emballement thermique, le module de batterie peut continuer à fonctionner correctement en limitant la perte de capacité énergétique.

De plus, les carters latéraux permettent d'emprisonner les accumulateurs afin de les renforcer mécaniquement et d'homogénéiser leurs températures. Le module de batterie présente ainsi une architecture compacte avec une bonne conduction thermique en fonctionnement nominal.

Dans un mode de réalisation, la plaque extérieure de protection thermique comporte une première tôle montée contre les capots des cellules d'accumulateurs et présentant des découpes autour des pôles des accumulateurs, une seconde tôle montée contre la première tôle en ménageant avec celle-ci un volume interne de confinement des éjecta qui est commun à l'ensemble des cellules d'accumulateurs, et au moins un filtre à particules positionné à une extrémité latérale de la plaque extérieure de protection thermique et s'ouvrant à l'intérieur du volume interne de confinement des éjecta.

Dans ce mode de réalisation, la seconde tôle de chaque plaque extérieure de protection thermique est avantageusement revêtue sur une face interne d'une feuille de protection thermique.

Dans un autre mode de réalisation, la plaque centrale de support mécanique comprend, du côté de la face latérale d'assemblage du module de batterie, une pluralité de volumes internes de confinement des éjecta qui sont indépendants les uns des autres, chaque volume de confinement des éjecta étant associé à une même cellule d'accumulateurs, comprenant une pluralité de poches formées autour des pôles de ladite cellule d'accumulateurs, et débouchant vers l'extérieur à chaque extrémité par l'intermédiaire d'un collecteur alimentant un filtre à particules.

Dans cet autre mode de réalisation, la plaque extérieure de protection thermique peut comprendre, du côté opposé à la face latérale d'assemblage du module de batterie, une pluralité de volumes internes de confinement des éjecta qui sont indépendants les uns des autres, chaque volume de confinement des éjecta étant associé à une même cellule d'accumulateurs, comprenant une pluralité de poches formées autour des pôles de ladite cellule d'accumulateurs, et débouchant vers l'extérieur à chaque extrémité par l'intermédiaire d'un collecteur alimentant un filtre à particules.

Dans ce cas, les poches des volumes de confinement d'éjecta sont avantageusement recouvertes d'un matériau de protection thermique.

Quel que soit le mode de réalisation, les systèmes de chauffage de la plaque centrale de support mécanique peuvent comprendre des résistances électriques positionnées chacune en vis-à-vis d'une cellule d'accumulateurs.

De plus, les busbars des cellules d'accumulateurs sont avantageusement connectées électriquement aux pôles des accumulateurs par l'intermédiaire de fils de liaison soudés sur les pôles et recouverts d'une couche d'isolation thermique et d'une couche d'isolation électrique.

Par ailleurs, la plaque extérieure de protection thermique peut être couplée à un système de refroidissement et la plaque centrale de support mécanique et la plaque extérieure de protection thermique peuvent être réalisées en aluminium.

L'invention a également pour objet une batterie pour véhicule extraterrestre comprenant au moins deux modules de batterie tels que définis précédemment qui sont couplés électriquement et assemblés mécaniquement l'un sur l'autre au niveau de leur face latérale d'assemblage respective.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue d'ensemble d'une batterie selon l'invention ;
- la figure 2 est une vue en coupe longitudinale de la batterie de la figure 1 ;
- la figure 3 est une vue en éclaté montrant une cellule d'accumulateurs d'un module de batterie selon l'invention ;
- la figure 4 est une vue partiellement en éclaté d'un module de batterie selon un premier mode de réalisation de l'invention ;
- la figure 5 est une loupe de la figure 4 ;
- la figure 6 est une vue en coupe longitudinale d'une partie du module de la figure 4 montrant les collecteurs d'éjecta ;
- les figures 7 et 8 sont des vues partiellement en éclaté d'un module de batterie selon un second mode de réalisation de l'invention ; et
- la figure 9 est une vue montrant la façon dont les busbars des cellules d'accumulateurs sont connectées électriquement aux pôles des accumulateurs.

### Description détaillée de modes de réalisation

L'invention concerne un module pour une batterie électrique de type batterie lithium-ion destinée à des applications spatiales, telles que les batteries équipant les véhicules extraterrestres.

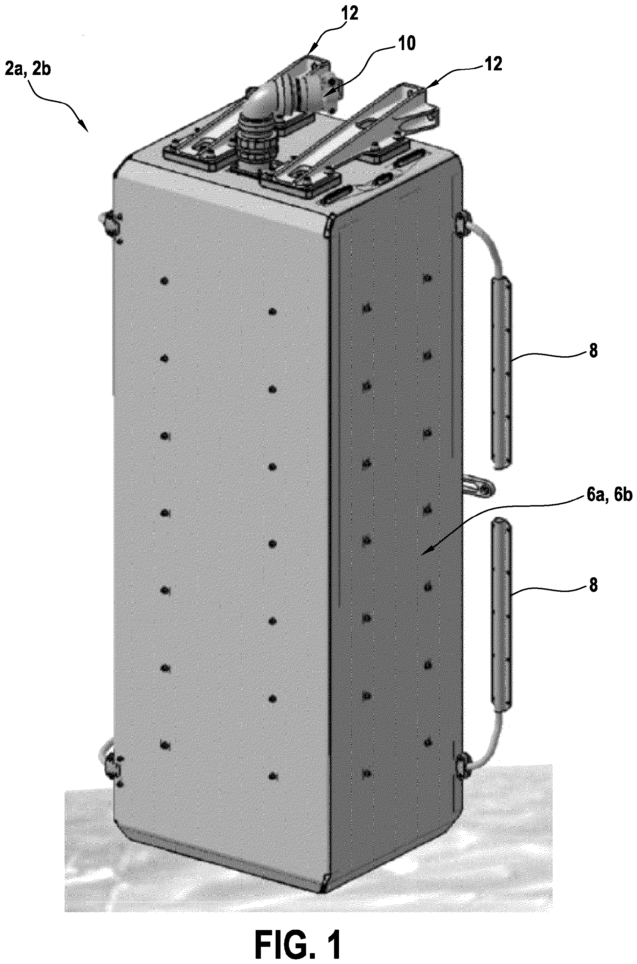

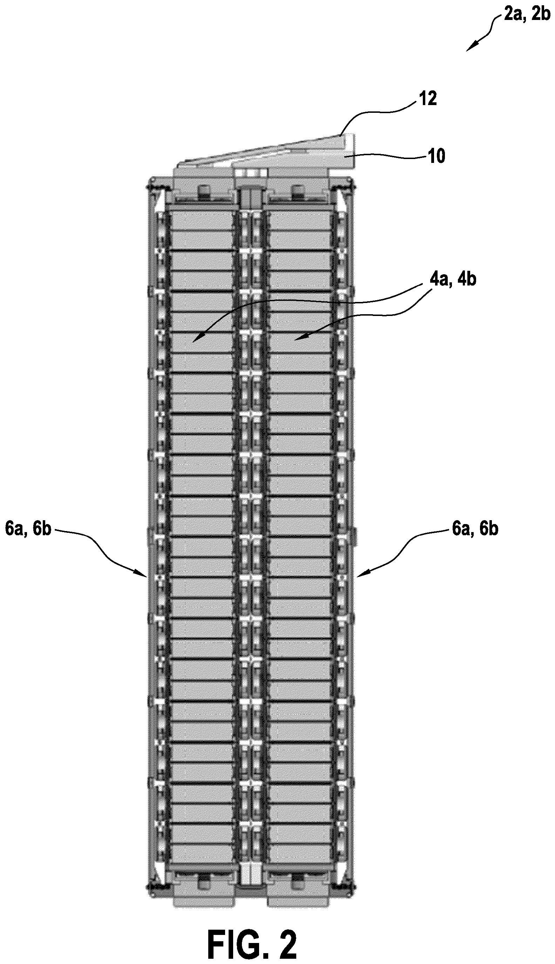

De façon connue, une batterie 2a, 2b électrique pour véhicule extraterrestre telle que celle représenté sur les figures 1 et 2 se compose d'une pluralité de modules de batterie 4a, 4b qui sont couplés électriquement entre eux et assemblés mécaniquement l'un sur l'autre.

Les modules de batterie 4a, 4b sont pris en sandwich entre deux plaques latérales extérieures de protection thermique 6a, 6b qui sont réalisées dans un matériau ayant une faible résistance thermique mais pouvant tenir aux températures élevées des éjecta, par exemple en aluminium.

Sur chaque plaque extérieure de protection thermique 6a, 6b est monté un ou plusieurs systèmes thermiques, soit pour refroidir avec des caloducs 8 à conductance variable ou constante (ou des ponts thermiques à faible résistance thermique), soit chauffer avec des résistances électriques (non représentées sur les figures 1 et 2).

Au niveau de l'une de ses deux faces d'extrémité, la batterie 2a, 2b comprend en outre une connectique de puissance 10 et des supports de fixation 12.

Chacun des modules de batterie 4a, 4b se compose d'une pluralité de cellules d'accumulateurs 14 qui sont assemblées mécaniquement et connectées électriquement entre elles.

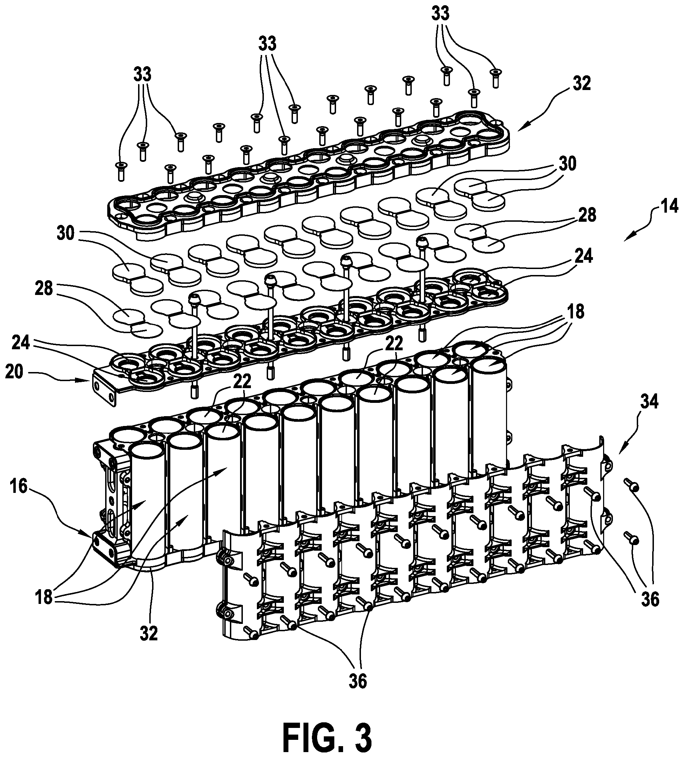

La figure 3 illustre un exemple d'architecture d'une cellule d'accumulateurs 14 pour la réalisation d'un module de batterie selon l'invention.

La cellule d'accumulateurs 14 représentée sur cette figure comprend un corps central 16 formant support sur lequel sont montés une pluralité d'accumulateurs 18. Plus précisément, les accumulateurs 18 sont disposés par paires d'accumulateurs disposés de part et d'autre du corps central 16. Le corps central 16 sert également de pont thermique pour distribuer la chaleur sur les accumulateurs.

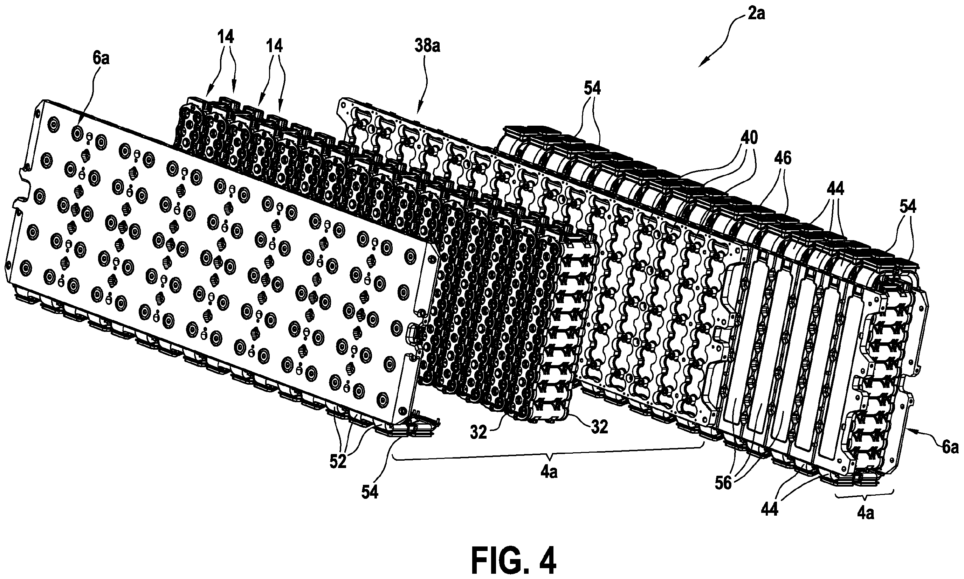

Dans l'exemple de réalisation de la figure 4, les accumulateurs 18 ont une forme cylindrique. Alternativement, ils pourraient présenter une forme prismatique.

De plus, deux busbars 20 (également appelés barres d'interconnexion) sont montés contre les pôles respectifs 22 des accumulateurs pour les connecter électriquement entre eux.

Les busbars 20 se présentent sous la forme de plaques réalisées dans un matériau conducteur qui présentent des découpes circulaires 24 au regard des pôles 22 des accumulateurs et qui sont vissées à chaque extrémité longitudinale sur le corps central 16.

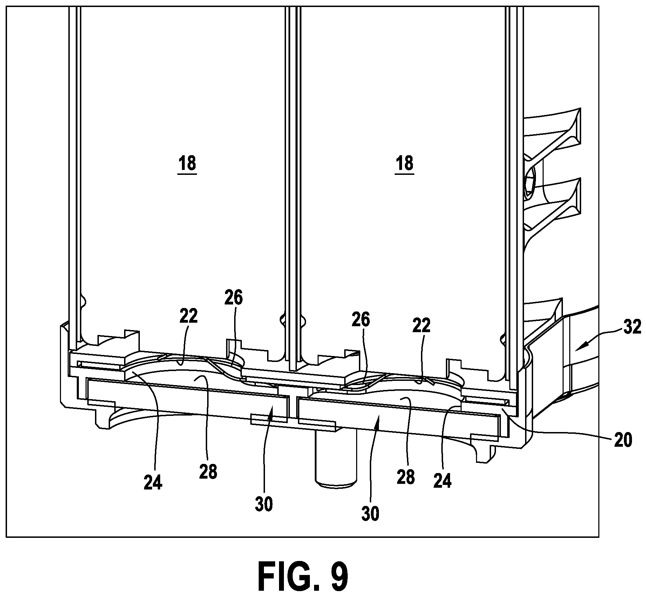

Comme représenté de façon plus précise sur la figure 9, chaque busbar 20 est connectée électriquement aux pôles 22 des accumulateurs par l'intermédiaire de fils de liaison 26 dont la section est calibrée pour fondre au-delà d'une certaine intensité de courant.

Les fils de liaison 26 sont soudés (par exemple par ultrasons) sur les pôles et sur les pôles 22 des accumulateurs et sont recouverts de plusieurs couches de matériau isolant thermique, isolant électrique, et isolant contre le feu.

Dans l'exemple de réalisation représenté sur la figure 3, les fils de liaison sont ainsi recouverts de pastilles circulaires 28 de feutre composé d'aérogel et fibres de verre (pour la protection thermique et électrique), et de pastilles circulaires 30 de mica (pour la protection contre le feu).

La cellule d'accumulateurs 14 comprend encore deux capots 32 réalisés dans un matériau résistant aux fortes températures de l'ordre de 1200°C (par exemple en G-10 / FR-4 qui est un stratifié thermodurcissable constitué d'un tissu de verre à filament continu avec un liant à base de résine époxy) et venant recouvrir les busbars 20 en étant fixés sur ces derniers par une pluralité de vis 33.

De plus, deux carters latéraux 34 sont emboîtés contre des faces latérales opposées des accumulateurs et sont fixés sur le corps central 16 de la cellule d'accumulateurs 14 par l'intermédiaire d'une pluralité de vis 36.

Plus précisément, les carters latéraux 34 présentent du côté interne une forme complémentaire à celle des accumulateurs de façon à venir parfaitement s'emboîter contre celles-ci. Ainsi, les accumulateurs de la cellule sont pris en sandwich entre les carters latéraux et le corps central, ce qui permet de tenir mécaniquement les accumulateurs pour résister aux vibrations et aux chocs.

Un élément flexible (non représenté sur les figures), par exemple un matériau souple électro-isolant et thermo-conducteur, est avantageusement est intercalé entre les accumulateurs 18 et les carters latéraux 34 et le corps central 16 afin d'obtenir un contact homogène sur les accumulateurs.

En liaison avec les figures 4 à 6, on décrira maintenant un premier mode de réalisation d'une batterie 2a conforme à l'invention.

Dans cet exemple de réalisation, la batterie 2a comprend deux modules de batterie 4a pris en sandwich entre deux plaques extérieures de protection thermique 6a, chaque module de batterie 4a étant formé par seize cellules d'accumulateurs 14 telles que décrites précédemment.

Bien entendu, le nombre de cellules d'accumulateurs par module de batterie pourrait être différent, de même que le nombre de modules de batterie pour former une batterie pourrait être différent.

Les deux modules de batterie 4a sont assemblés l'un contre l'autre au niveau de l'une de leurs faces latérales (appelée ci-après face latérale d'assemblage), cette face latérale étant du côté opposé au deux plaques extérieures de protection thermique 6a.

Dans ce premier mode de réalisation, chaque module de batterie 4a comprend en outre une plaque centrale de support mécanique 38a qui est montée contre les capots 32 des cellules d'accumulateurs du côté de la face latérale d'assemblage du module.

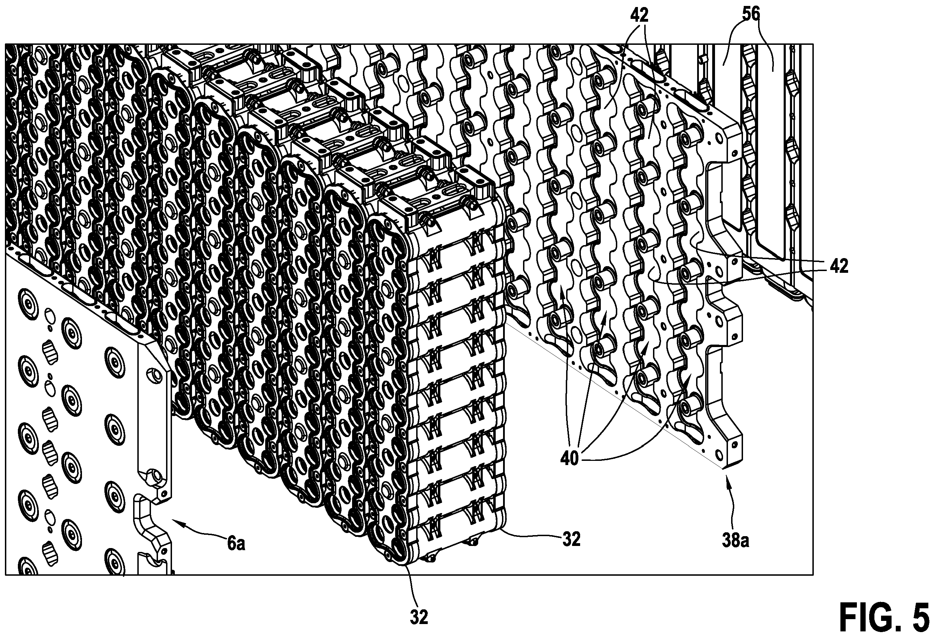

Comme représenté plus en détails sur la figure 5, cette plaque centrale de support mécanique 38a comprend, du côté de la face latérale d'assemblage du module de batterie correspondant, une pluralité de volumes internes de confinement des éjecta 40 qui sont indépendants les uns des autres.

Plus précisément, chacun de ces volumes de confinement des éjecta 40 est associé et commun à une même cellule d'accumulateurs 14 et comprend une pluralité de poches 42 qui sont destinées à être positionnées autour des pôles de ladite cellule d'accumulateurs.

Au niveau des deux extrémités longitudinales de la cellule d'accumulateurs, chaque volume de confinement des éjecta 40 débouche dans un collecteur 44 alimentant un filtre à particules 46, ce dernier s'ouvrant vers l'extérieur pour évacuer les gaz filtrés.

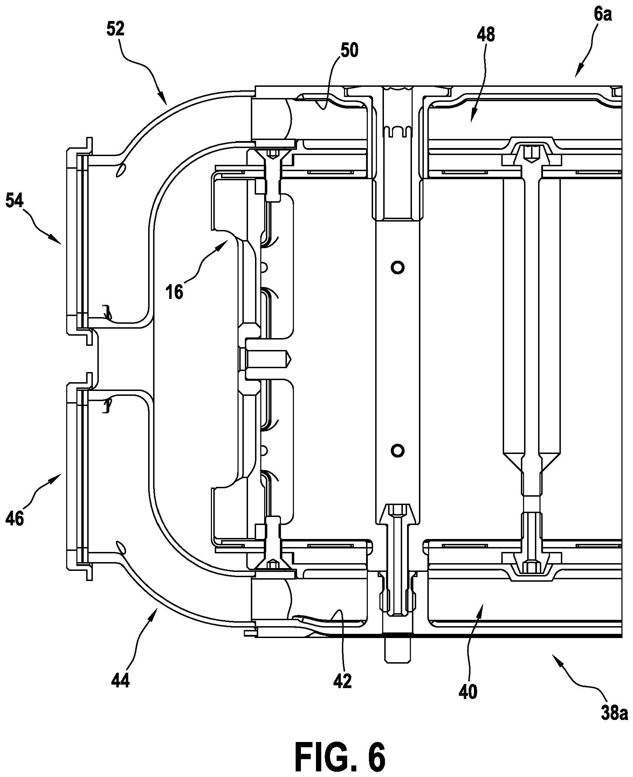

De même, la plaque extérieure de protection thermique 6a du module de batterie 4a selon ce premier mode de réalisation comprend, du côté opposé à la face latérale d'assemblage du module, une pluralité de volumes internes de confinement des éjecta 48 (voir la figure 6) qui sont indépendants les uns des autres.

Chacun de ces volumes de confinement des éjecta 48 est commun et associé à une même cellule d'accumulateurs et comprend une pluralité de poches 50 qui sont destinées à être positionnées autour des pôles de ladite cellule d'accumulateurs.

Comme représenté sur la figure 6, au niveau des deux extrémités longitudinales de la cellule d'accumulateurs, les volumes de confinement des éjecta 48 débouchent chacun dans un collecteur 52 alimentant un filtre à particules 54.

Typiquement, les filtres à particules 46, 54 contiennent de la paille d'inox, de la fibre ou laine de verre, etc. afin d'absorber toute l'énergie cinétique des éjecta tout en libérant la pression.

De la sorte, en cas d'emballement thermique extrême de l'une des cellules d'accumulateurs du module de batterie, les éjecta se répandent à l'intérieur du volume de confinement d'éjecta 40, 48 correspondant, ce qui permet d'éviter que ces éjecta ne se propagent en dehors du module et endommagent les autres cellules d'accumulateurs.

Selon une disposition avantageuse, les poches respectives 42, 50 de ces volumes de confinement d'éjecta 40, 48 sont recouvertes d'un matériau de protection thermique (par exemple de la fibre de verre).

Toujours dans ce premier mode de réalisation, la plaque centrale de support mécanique 38a qui est montée contre les capots des cellules d'accumulateurs comprend, du côté opposé aux capots, des systèmes de chauffage.

Typiquement, ces systèmes de chauffage comprennent des résistances électriques 56 qui sont positionnées chacune en vis-à-vis des cellules d'accumulateurs 14 du module de batterie correspondant.

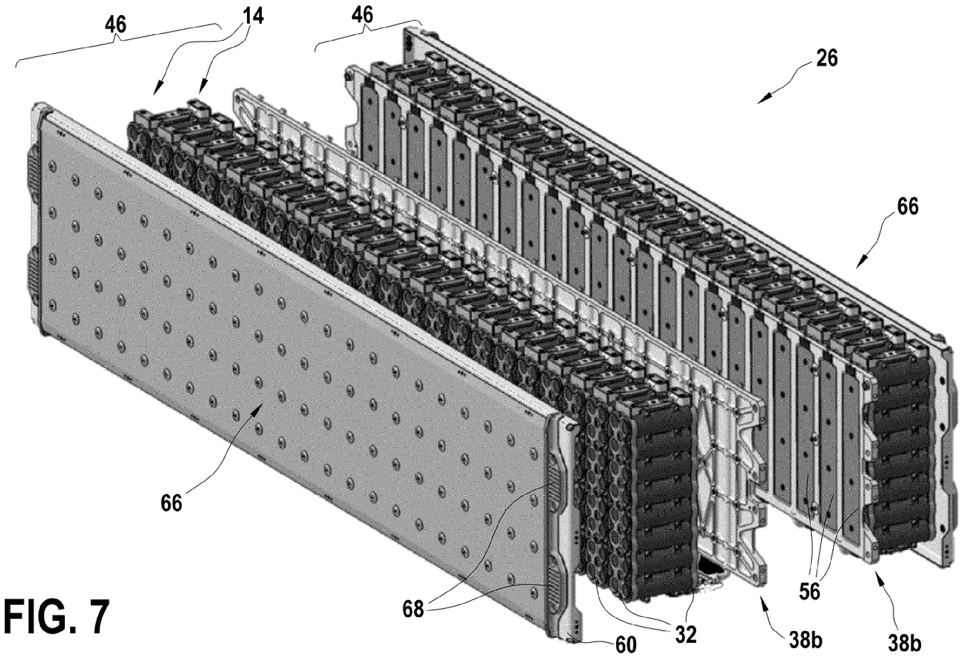

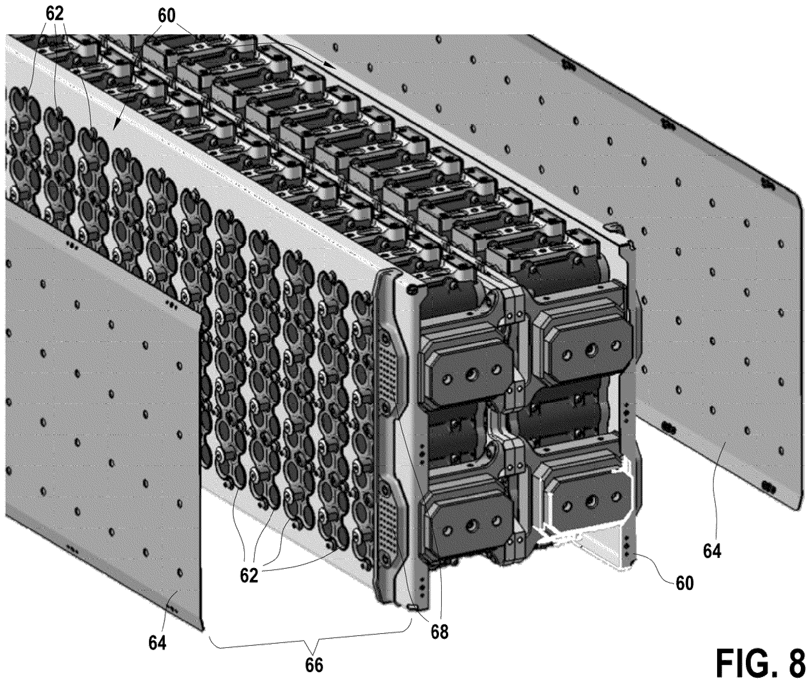

En liaison avec les figures 7 et 8, on décrira maintenant un second mode de réalisation d'une batterie 2b conforme à l'invention.

Dans ce second mode de réalisation, la batterie 2b comprend également deux modules de batterie 4b pris en sandwich entre deux plaques extérieures de protection thermique 6b, chaque module de batterie 4b étant formé par seize cellules d'accumulateurs telles que décrites précédemment.

Chaque module de batterie 4b comprend en outre une plaque centrale de support mécanique 38b qui est montée contre les capots 32 des cellules d'accumulateurs du côté de la face latérale d'assemblage du module.

Du côté opposé aux capots des cellules d'accumulateurs, cette plaque centrale 38b de support mécanique comprend des systèmes de chauffage. Typiquement, ces systèmes de chauffage comprennent des résistances électriques 56 qui sont positionnées chacune en vis-à-vis des cellules d'accumulateurs du module de batterie correspondant.

Dans ce second mode de réalisation, chaque plaque extérieure de protection thermique 6b comprend notamment d'une première tôle 60 qui est montée contre les capots 32 des cellules d'accumulateurs et qui présente des découpes 62 autour des pôles respectifs des accumulateurs.

La plaque extérieure de protection thermique 6b comprend en outre une seconde tôle 64 qui est montée contre la première tôle 60 en ménageant avec celle-ci un même volume interne de confinement des éjecta (non représenté) qui est commun à l'ensemble des cellules d'accumulateurs.

Ainsi, contrairement au premier mode de réalisation, le volume de confinement des éjecta n'est pas individualisé par cellule d'accumulateurs mais il est ici commun pour l'ensemble des cellules d'accumulateurs d'un même module de batterie.

Au niveau des deux extrémités latérales de la plaque extérieure de protection thermique 6b, ce volume de confinement des éjecta débouche vers l'extérieur par l'intermédiaire de filtres à particules 68.

Ainsi, en cas d'emballement thermique extrême de l'une des cellules d'accumulateurs du module de batterie, les éjecta se répandent à l'intérieur des volumes communs de confinement d'éjecta correspondant, ce qui permet de contenir les éjecta et d'éviter qu'ils ne se propagent en dehors du module de batterie.

Selon une disposition avantageuse, la seconde tôle 64 de chaque plaque extérieure de protection thermique 6b est revêtue sur une face interne d'une feuille de protection thermique (non représentée sur les figures), par exemple en en fibre de verre), afin d'assurer la tenue à de très hautes températures.

## Revendications

1. Module de batterie (4a ; 4b) pour véhicule extraterrestre, comprenant :
- une pluralité de cellules d'accumulateurs (14) assemblées mécaniquement entre elles et connectées électriquement entre elles, chaque cellule d'accumulateurs comprenant :
∘ un corps central (16) formant support ;
∘ une pluralité d'accumulateurs (18) disposés par paires de part et d'autre du corps central ;
∘ deux busbars (20) montés contre les pôles (22) respectifs des accumulateurs (18) pour les connecter électriquement entre eux ;
∘ deux capots (32) montés contre les busbars ; et
∘ deux carters latéraux (34) emboîtés contre des faces latérales opposées des accumulateurs et fixés sur le corps central ;
- une plaque centrale de support mécanique (38a ; 38b) montée contre les capots (32) des cellules d'accumulateurs (14) du côté d'une face latérale d'assemblage du module de batterie et comprenant, du côté opposé aux capots, des systèmes de chauffage (56) ; et
- une plaque extérieure de protection thermique (6a ; 6b) montée contre les capots des cellules d'accumulateurs du côté opposé à la face latérale d'assemblage du module de batterie en délimitant avec ces capots au moins un volume interne de confinement des éjecta (48) qui débouche vers l'extérieur par l'intermédiaire de filtres à particules (54 ; 68).

2. Module de batterie (4b) selon la revendication 1, dans lequel la plaque extérieure de protection thermique (6b) comporte :
- une première tôle (60) montée contre les capots des cellules d'accumulateurs et présentant des découpes (62) autour des pôles des accumulateurs,
- une seconde tôle (64) montée contre la première tôle (60) en ménageant avec celle-ci un volume interne de confinement des éjecta qui est commun à l'ensemble des cellules d'accumulateurs, et
- au moins un filtre à particules (68) positionné à une extrémité latérale de la plaque extérieure de protection thermique (6b) et s'ouvrant à l'intérieur du volume interne de confinement des éjecta.

3. Module de batterie (4b) selon la revendication 2, dans lequel la seconde tôle (64) de la plaque extérieure de protection thermique (6b) est revêtue sur une face interne d'une feuille de protection thermique.

4. Module de batterie (4a) selon la revendication 1, dans lequel la plaque centrale de support mécanique (38a) comprend, du côté de la face latérale d'assemblage du module de batterie, une pluralité de volumes internes de confinement des éjecta (40) qui sont indépendants les uns des autres, chaque volume de confinement des éjecta étant associé à une même cellule d'accumulateurs (14), comprenant une pluralité de poches (42) formées autour des pôles (22) de ladite cellule d'accumulateurs, et débouchant vers l'extérieur à chaque extrémité par l'intermédiaire d'un collecteur (44) alimentant un filtre à particules (46).

5. Module de batterie (4a) selon la revendication 4, dans lequel la plaque extérieure de protection thermique (6a) comprend, du côté opposé à la face latérale d'assemblage du module de batterie, une pluralité de volumes internes de confinement des éjecta (48) qui sont indépendants les uns des autres, chaque volume de confinement des éjecta étant associé à une même cellule d'accumulateurs (14), comprenant une pluralité de poches (50) formées autour des pôles (22) de ladite cellule d'accumulateurs, et débouchant vers l'extérieur à chaque extrémité par l'intermédiaire d'un collecteur (52) alimentant un filtre à particules (54).

6. Module de batterie (4a) selon la revendication 5, dans lequel les poches (42, 50) des volumes de confinement d'éjecta sont recouvertes d'un matériau de protection thermique.

7. Module de batterie (4a ; 4b) selon l'une quelconque des revendications 1 à 6, dans lequel les systèmes de chauffage de la plaque centrale de support mécanique comprennent des résistances électriques (56) positionnées chacune en vis-à-vis d'une cellule d'accumulateurs.

8. Module de batterie (4a ; 4b) selon l'une quelconque des revendications 1 à 7, dans lequel les busbars (20) des cellules d'accumulateurs (18) sont connectées électriquement aux pôles (22) des accumulateurs par l'intermédiaire de fils de liaison (28) soudés sur les pôles et recouverts d'une couche d'isolation thermique et d'une couche d'isolation électrique (28).

9. Module de batterie (4a ; 4b) selon l'une quelconque des revendications 1 à 8, dans lequel la plaque extérieure de protection thermique (6a ; 6b) est couplée à un système de refroidissement (8).

10. Module de batterie (4a ; 4b) selon l'une quelconque des revendications 1 à 9, dans lequel la plaque centrale de support mécanique (38a ; 38b) et la plaque extérieure de protection thermique (6a ; 6b) sont réalisées en aluminium.

11. Batterie (2a ; 2b) pour véhicule extraterrestre comprenant au moins deux modules de batterie (4a ; 4b) selon l'une quelconque des revendications 1 à 10 qui sont couplés électriquement et assemblés mécaniquement l'un sur l'autre au niveau de leur face latérale d'assemblage respective.
